# FASCICULE DE BREVET EUROPEEN

(11) **EP 2 859 234 B1**
(45) Date de publication et mention de la délivrance du brevet: **14.09.2016**
(21) Numéro de dépôt: 13730017.4
(22) Date de dépôt: 31.05.2013
(51) Int. Cl.: F03G 7/06

(54) **ACTIONNEUR À ENROULEMENT EN MATÉRIAU À MÉMOIRE DE FORME**
WICKLUNGSAKTUATOR AUS EINEM FORMGEDÄCHTNISMATERIAL
WINDING ACTUATOR MADE OF SHAPE MEMORY MATERIAL

(30) Priorité: 04.06.2012 FR 1201596
(43) Date de publication de la demande: 15.04.2015
(73) Titulaire: Centre National d'Etudes Spatiales (CNES), 75001 Paris (FR)
(72) Inventeur: SICRE, Jacques, F-32600 L'isle Jourdain (FR)
(74) Mandataire: Cabinet BARRE LAFORGUE & associés
(86) Numéro de dépôt international: PCT/FR2013/051242
(87) Numéro de publication internationale: WO 2013/182791

(56) Documents cités:
- EP-A2- 0 304 944
- JP-A- 61 017 788
- JP-A- 63 205 467
- JP-A- 63 253 180
- JP-A- 2004 036 508
- US-A1- 2009 189 100

## Description

L'invention concerne un actionneur dont l'énergie mécanique est fournie par la déformation d'un matériau à mémoire de forme, notamment lors d'un changement de la température dudit matériau à mémoire de forme.

Dans tout le texte, un matériau à mémoire de forme est un matériau présentant au moins deux formes stables à deux températures différentes, dont l'une au moins correspond à une forme géométrique particulière. La forme d'un tel matériau est modifiée par transformation de phase solide-solide (dites austénitique-martensitique par comparaison aux aciers notamment) lorsqu'il est soumis à une modification de son environnement, notamment lorsqu'il est chauffé au dessus - ou refroidi en dessous - d'une température, dite température de transformation, qui marque le début d'une plage de températures dans laquelle le matériau se déforme progressivement entre une forme et une autre.

Aussi, un tel matériau à mémoire de forme peut être du type « simple sens », c'est-à-dire qu'il se déforme vers une forme stable uniquement lorsqu'il est chauffé au-delà de sa température de transformation. Un tel matériau à mémoire de forme peut aussi être du type « double sens », qui présente la même caractéristique qu'un matériau à mémoire de forme « simple sens » mais qui se déforme aussi vers une forme stable lorsqu'il est refroidi au-dessous de sa température de transformation.

Les matériaux à mémoire de forme les plus connus sont des alliages métalliques parmi lesquels notamment les Nitinol (alliages nickel-titane (NiTi)).

On connaît des dispositifs d'actionnement, et notamment des actionneurs de verrouillage/déverrouillage par un mouvement d'extension/rétraction d'une tige, qui utilisent un matériau à mémoire de forme. Cependant, la faible puissance mécanique développée par les matériaux à mémoire de forme les a cantonnés à des dispositifs de déclenchement d'un organe moteur plus puissant, par exemple un ressort comprimé. (Cf. par exemple US 5,771,742).

De tels actionneurs présentent de nombreux inconvénients. Un ressort comprimé comme organe moteur exerce une tension mécanique permanente sur le corps de l'actionneur qui doit être dimensionné pour résister à cette tension sans se déformer dans le temps. Le corps d'actionneur doit donc être réalisé dans un matériau résistant et/ou suffisamment épais. Cela ne permet donc pas de réaliser des actionneurs légers et compacts, ce qui est un facteur particulièrement pénalisant dans certains domaines techniques, par exemple dans le domaine des actionneurs pour satellites.

De plus, un ressort comprimé crée des vibrations et des chocs, lorsqu'il libère l'énergie mécanique qu'il stocke, qui peuvent être néfastes au système sur lequel l'actionneur est monté. L'ajout de moyens d'amortissement est aussi pénalisant en termes de poids et d'encombrement.

Par ailleurs, la libération d'énergie mécanique par un ressort comprimé est généralement brutale et peut conduire à la détérioration des éléments mobiles de l'actionneur ou d'éléments en regard avec lesquels il coopère, par exemple des pênes de verrouillage dans le cas d'un actionneur de verrouillage/déverrouillage.

D'autres systèmes connus mettent en oeuvre de plus grandes quantités de matériau à mémoire de forme, sous la forme de blocs notamment. On connaît par exemple EP0304944 ou WO2007036285 qui divulguent des dispositifs comprenant des blocs massifs de matériau à mémoire de forme chauffés par des résistances électriques.

Cela permet de fournir une énergie mécanique plus importante, mais leur chauffage est difficile : de grosses résistances de chauffage sont nécessaires, le chauffage par effet Joule requiert une intensité très élevée, etc. Le chauffage difficile de ces actionneurs implique en outre une faible réactivité : le temps de passage d'une forme de repos à une forme mémorisée est très important.

Ces inconvénients ne sont en outre pas compatibles avec des systèmes autonomes dont on souhaite économiser les ressources en énergie, par exemple à bord des véhicules, des systèmes spatiaux tels que les satellites, ou des aéronefs.

L'invention vise à pallier ces inconvénients en proposant un actionneur dont l'organe moteur ne se décharge pas brutalement de son énergie.

L'invention vise encore un actionneur qui ne provoque que peu ou pas de vibrations lorsqu'il est en mouvement.

L'invention vise aussi un actionneur dont la réalisation soit simple et donc fiable, légère et compacte.

L'invention vise en outre un actionneur qui ne peut pas être déclenché par des vibrations externes.

Plus particulièrement, l'invention vise un actionneur dont l'unique énergie mécanique provient de la déformation d'un matériau à mémoire de forme, mais disposant d'une puissance mécanique plus importante que celle des mécanismes de déclenchement connus de l'état de la technique.

L'invention vise à fournir un actionneur dont le rapport de la puissance mécanique qu'il fournit sur l'énergie nécessaire à son chauffage est meilleur que celui des actionneurs en matériau à mémoire de forme connus de l'état de la technique.

Pour ce faire, l'invention concerne un actionneur comportant :
- un corps,
- un équipage mobile en translation par rapport au corps selon une direction, dite direction de translation,
- une première butée mobile formée d'une paroi de l'équipage mobile, et une deuxième butée reliée mécaniquement au corps par une transmission mécanique d'efforts selon ladite direction de translation,
- au moins un enroulement, dit enroulement moteur, en matériau à mémoire de forme présentant au moins une forme stable, dite forme mémorisée, et étant interposé entre les deux butées, ces dernières étant écartées l'une de l'autre selon la direction de translation d'un écartement différent selon la forme de l'enroulement moteur, ledit équipage mobile étant déplacé par rapport au corps sous l'effet d'une variation de cet écartement induite par déformation dudit enroulement moteur, caractérisé en ce que l'enroulement moteur est un enroulement à spires jointives électriquement isolées, adapté pour pouvoir se déformer par déformation en flexion commune à toutes les spires.

Un actionneur selon l'invention est avantageusement un actionneur linéaire. Un actionneur linéaire a pour action le déplacement en translation, d'un équipage mobile. En particulier, l'équipage mobile peut par exemple se déplacer en translation selon un axe principal ou longitudinal du corps de l'actionneur. Notamment, un tel actionneur permet des mouvements d'extension/rétraction longitudinaux d'un équipage mobile à l'une au moins des extrémités de l'actionneur.

Parmi les actionneurs linéaires, un actionneur selon l'invention peut être à simple effet (actionneur à pousser ou à traction, à soufflet, etc.) ou à double effet, c'est-à-dire capable de fournir tant un effort en traction qu'un effort en poussée.

Par ailleurs, un équipage selon l'invention présente avantageusement au moins une portion sous la forme d'une tige. Avantageusement, la dimension principale longitudinale de cette tige est orientée selon la direction principale longitudinale du corps et correspond aussi à la direction de translation. C'est en particulier cette portion sous forme de tige de l'équipage mobile qui peut réaliser des mouvements d'extension/rétraction. La tige présente alors une position déployée et une position escamotée.

Ainsi, un actionneur selon l'invention peut être un actionneur simple tige ou à tige traversante.

L'enroulement en matériau à mémoire de forme est interposé entre deux butées. L'une au moins des butées est une paroi de l'équipage mobile et elle peut donc être déplacée par rapport au corps d'actionneur, une telle butée est dite butée mobile dans la suite.

La butée mobile est agencée pour pouvoir transmettre au moins une partie de son déplacement à la tige mobile et ainsi entraîner la tige mobile en déplacement. A cet effet, la butée mobile peut être mécaniquement solidaire de la tige mobile, par exemple elle peut constituer un équipage mobile en une pièce avec la tige mobile. Rien n'empêche, en variante, qu'un mécanisme de transmission et/ou de transformation du mouvement soit, au sein de l'équipage mobile, interposé entre la butée mobile et la tige mobile.

Un équipage mobile selon l'invention peut donc présenter de nombreux modes de réalisation.

Dans ce mode de réalisation et selon l'invention, une butée mobile est maintenue écartée d'une deuxième butée, notamment par un enroulement moteur. L'enroulement moteur étant interposé entre ces deux butées, sa déformation se réalise de telle manière que l'écartement entre les deux butées est modifié par sa déformation. En particulier, l'écartement entre les deux butées est modifié lorsque l'enroulement moteur passe d'une forme quelconque à une forme mémorisée par modification de sa température. Dans certains modes de réalisation, l'enroulement moteur passe d'une forme dans laquelle il est comprimé entre les deux butées à une forme mémorisée.

La seconde butée étant en transmission mécanique d'efforts selon la direction de translation avec le corps, elle sert d'appui audit enroulement moteur, par rapport au corps, pour déplacer l'équipage mobile en translation de par sa déformation.

Ainsi, la seconde butée peut être une paroi du corps, ou encore une pièce solidaire du corps, ou encore une butée mobile présentant un moyen de transmission mécanique des efforts entre elle et le corps. Par exemple, un deuxième enroulement à mémoire de forme peut être interposé entre cette butée et le corps. Si ce deuxième enroulement à mémoire de forme est actionné en même temps que le premier, il tend vers sa forme mémorisée et s'oppose à toute déformation qui l'en éloignerait. Il permet donc de réalisation une transmission mécanique d'effort entre la butée mobile et le corps.

Avantageusement et selon l'invention, les deux butées forment des surfaces conjuguées entre lesquelles un enroulement moteur est maintenu avant sa déformation, procurant ainsi un arrangement particulièrement compact.

L'enroulement moteur est un enroulement à spires jointives électriquement isolées, c'est-à-dire que les spires sont disposées côte à côte en contact mécanique latéral les unes avec les autres. Les spires peuvent être réalisées jointives de différentes manières, ainsi, elles peuvent par exemple être littéralement collées les unes aux autres. Selon un autre exemple de réalisation, elles peuvent être maintenues au sein d'un enroulement moteur, par exemple par des pinces, tout en disposant d'une certaine liberté de glisser les unes par rapport aux autres afin d'éviter de trop fortes tensions lors d'une flexion importante de l'enroulement moteur.

Les spires sont de plus isolées latéralement de sorte que le courant les parcourt longitudinalement les unes après les autres sur toute leur longueur, sans créer de court-circuit entre deux spires. Cette isolation peut être réalisée de différentes manières, par exemple avec un vernis, avec une gaine isolante, ou encore en moulant l'ensemble des spires de l'enroulement moteur dans un matériau électriquement isolant.

En effet, dans la présente invention, les spires d'un même enroulement moteur sont électriquement en série de sorte que le courant parcourt avantageusement toute la longueur de chacune des spires. Un tel enroulement moteur oppose ainsi une résistance électrique de valeur substantielle au passage du courant qui est au moins égale à la somme des résistances électriques individuelles de chacune des spires qui le constituent.

On peut donc choisir la section des spires d'un enroulement moteur en fonction de la résistivité et de la température de transformation du matériau à mémoire de forme utilisé. Alternativement on peut aussi choisir un matériau à mémoire de forme en fonction de sa résistivité et de sa température de transformation pour satisfaire des critères d'encombrement d'un actionneur selon l'invention (nombre d'enroulements moteurs, nombre de spires par enroulement moteur, section de chaque spire, etc.).

Chaque spire représente un tour d'un fil de l'enroulement moteur autour d'un axe. Les spires ne sont pas nécessairement toutes enroulées strictement autour du même axe. Cependant, avantageusement, elles sont toutes enroulées au moins sensiblement autour d'un même axe, dit axe d'enroulement. De plus, les spires peuvent présenter différentes formes d'enroulement autour de l'axe d'enroulement : triangulaire, carré, polygonal, spiral, ...

L'enroulement moteur comprend avantageusement plusieurs spires dans un même plan. Il comprend notamment plusieurs spires concentriques autour d'un axe d'enroulement, et disposées dans un même plan orthogonal audit axe d'enroulement. Les spires n'agissent donc pas mécaniquement en série (une spire pousse la suivante) mais bien en parallèle.

L'axe d'enroulement des spires est avantageusement et selon l'invention sensiblement confondu avec la direction de translation.

Avantageusement, l'enroulement moteur est et reste un enroulement à spires jointives quelle que soit la forme géométrique qu'il adopte. Les spires sont notamment avantageusement jointives dans la forme de repos et dans la forme mémorisée. Cette disposition du matériau à mémoire de forme en enroulement à spires jointives permet de multiplier la puissance mécanique développée, à volume égal de matériau à mémoire de forme, et pour une intensité de courant fournie réduite. En effet, les différentes spires de l'enroulement moteur ont une action mécanique en parallèle. Elles se déforment, et donc exercent des efforts mécaniques individuels simultanés en parallèle, l'effort mécanique total étant une somme des efforts individuels de chaque spire. L'enroulement moteur agit donc mécaniquement comme un actionneur massif en matériau à mémoire de forme.

La disposition d'un enroulement moteur constitué de spires d'un ou plusieurs fils en série électriquement, permet de chauffer plus facilement le matériau à mémoire de forme dont ils sont constitués, avec une intensité de courant réduite.

Un enroulement moteur selon l'invention développe ainsi une puissance mécanique importante, tout en étant très réactif - c'est-à-dire qu'il peut passer rapidement d'une forme de repos à une forme mémorisée - par un simple chauffage par effet Joule.

Avantageusement, un enroulement moteur selon l'invention comporte entre 1 et 1 000 000 de spires, notamment entre 10 et 10 000 spires, en particulier entre 10 et 100 spires. Les dimensions et les caractéristiques du fil de l'enroulement moteur (diamètre, matériau, etc.), le nombre, le diamètre et la forme des spires, sont déterminées pour chaque actionneur en fonction du cahier des charges de définition d'un tel actionneur (effort maximal, déplacement de la tige mobile, volume, courant électrique disponible, etc.).

Un enroulement moteur selon l'invention est avantageusement de forme plate, c'est-à-dire de hauteur axiale (le long de l'axe d'enroulement) inférieure aux dimensions radiales extérieures moyennes de l'enroulement, dans au moins une de ses deux formes fonctionnelles.

En effet, avantageusement et selon l'invention, ledit enroulement moteur à spires jointives se déforme en flexion par rapport à un plan orthogonal à ladite direction de translation.

Un enroulement moteur selon l'invention présente avantageusement deux formes fonctionnelles entre lesquelles il peut se déformer. En particulier il présente au moins une forme, dite forme mémorisée, vers laquelle il tend à se déformer sous l'effet d'un stimulus externe, notamment d'un chauffage. Cette déformation résulte d'une transformation de phase solide-solide, notamment de type austénitique-martensitique par analogie avec les aciers. Un enroulement moteur selon l'invention présente par ailleurs au moins une deuxième forme obtenue par conditionnement (déformation) de la forme mémorisée, dite forme de repos, dans laquelle il se trouve avant une déformation de retour vers la forme mémorisée.

Ainsi, dans le cas d'un enroulement moteur à usage unique, ce dernier se trouve d'abord dans une forme de repos, puis sous l'effet d'un stimulus approprié, il se déforme une unique fois vers une forme mémorisée. Dans le cas d'un enroulement moteur que l'on souhaite réutiliser plusieurs fois, il peut être ensuite ramené d'une forme mémorisée à une forme de repos. Cela peut être réalisé soit par l'application d'une contrainte mécanique, soit, dans le cas d'un matériau à mémoire de forme double sens, par la non-application du stimulus (par exemple l'arrêt d'un chauffage suivi d'un refroidissement naturel passif), ou simplement par l'application d'un autre type de stimulus (par exemple un refroidissement forcé).

Un enroulement moteur selon l'invention présente avantageusement une forme de repos, et une forme mémorisée. De plus, un enroulement moteur selon l'invention passe avantageusement d'une forme à une autre par flexion par rapport à un plan orthogonal à la direction de translation. C'est-à-dire qu'entre sa forme de repos et sa forme mémorisée, l'enroulement moteur est plus ou moins en saillie d'un côté et/ou de l'autre de ce plan. Ainsi, par exemple, un enroulement moteur selon l'invention peut être relativement plat à proximité d'un tel plan dans sa forme de repos, et présenter une forme fléchie en saillie par rapport à ce plan dans sa forme mémorisée.

Par ailleurs, un actionneur selon l'invention peut comporter un dispositif de chauffage de l'enroulement moteur en matériau à mémoire de forme, ou ne pas en comporter. En effet, un actionneur selon l'invention peut être utilisé dans des situations telles qu'il est souhaitable que son action dépende de la température ambiante. Par exemple, un tel actionneur dans un système de sécurité permet un déverrouillage automatique dès lors que la température ambiante dépasse la température de transformation du matériau à mémoire de forme.

Cependant, avantageusement et selon l'invention, un actionneur à enroulement moteur en matériau à mémoire de forme comporte un dispositif de chauffage adapté pour pouvoir chauffer ledit enroulement moteur au moins jusqu'à une température, dite température de transformation, au-dessus de laquelle l'enroulement moteur tend à se déformer vers une forme mémorisée.

Ladite température de transformation est la température à partir de laquelle le matériau à mémoire de forme utilisé pour réaliser l'enroulement moteur commence à se déformer vers une forme mémorisée. C'est la première température de la plage de températures de transformation au cours desquelles le matériau passe entièrement d'une première forme à une forme mémorisée.

Le dispositif de chauffage permet de commander l'actionneur en commandant la déformation de l'enroulement moteur.

Le dispositif de chauffage permet d'amener l'enroulement moteur en matériau à mémoire de forme au moins à sa température de transformation afin qu'il exerce un effort sur les butées qui lui sont adjacentes, en se déformant vers une forme mémorisée.

Un dispositif de chauffage selon l'invention peut être réalisé de multiples manières. Par exemple, un dispositif de chauffage peut chauffer l'ensemble de l'actionneur, depuis l'extérieur du corps. Cela peut permettre de réaliser un actionneur dont le corps n'est pas traversé par le dispositif de chauffage (tubes, connexions électriques, ...) pour la réalisation d'un corps d'actionneur étanche par exemple. Au contraire, le dispositif de chauffage peut être avantageusement dédié au chauffage du matériau à mémoire de forme lui-même, afin de ne dépenser de l'énergie de chauffage que sur les pièces sur lesquelles elle est réellement utile.

Différents dispositifs de chauffage peuvent être envisagés. Par exemple, un dispositif de chauffage peut consister en des résistances électriques ; en particulier en de fines résistances électriques collées à la surface du matériau à mémoire de forme. Alternativement un dispositif de chauffage peut être constitué de canalisations permettant la circulation d'un fluide chaud à proximité du matériau à mémoire de forme. D'autres moyens de chauffage jugés avantageux peuvent être utilisés dans le cadre de l'invention.

En outre, avantageusement et selon l'invention, un tel actionneur comporte un dispositif de refroidissement adapté pour pouvoir refroidir l'enroulement moteur jusqu'à une température prédéterminée, au-dessous de laquelle l'enroulement moteur tend à se déformer vers une seconde forme mémorisée.

En particulier un tel dispositif est adapté pour refroidir l'enroulement moteur en dessous de sa température de transformation.

Un tel dispositif de refroidissement permet avantageusement d'accélérer les cycles de déformation d'un enroulement moteur selon l'invention. En effet, s'il repasse plus vite sous sa température de transformation, il pourra être déformé par un élément mécanique extérieur plus tôt, dans le cas notamment d'un enroulement moteur en matériau à mémoire de forme simple sens, et il pourra donc être à nouveau chauffé et à nouveau déformé plus tôt.

Par ailleurs, et en particulier dans le cas d'un enroulement moteur en matériau à mémoire de forme à double sens, un dispositif de refroidissement permet de contrôler la déformation, et donc l'actionnement, d'un enroulement moteur lorsqu'il se déforme vers une deuxième forme mémorisée, à basse température. Ainsi, on peut obtenir, avec un unique enroulement moteur en matériau à mémoire de forme à double sens, un actionneur à double effet (c'est-à-dire à pousser et à traction), à condition que l'enroulement soit mécaniquement relié à chacune des deux butées adjacentes pour pouvoir les rapprocher l'une de l'autre autant que de les écarter l'une de l'autre.

Par ailleurs, des moyens de fourniture d'énergie au dispositif de chauffage (et/ou un dispositif de refroidissement), peuvent être contenus dans l'actionneur lui-même ou bien être en dehors de l'actionneur. Dans le premier cas ils sont dédiés à l'actionneur et permettent de réaliser un actionneur autoalimenté. Dans le second cas, ils peuvent être communs à plusieurs actionneurs et/ou plusieurs sous-systèmes, notamment lorsque l'actionneur fait partie d'un système plus grand (satellite, avion, etc.).

En effet, la plupart des matériaux à mémoire de forme sont des alliages métalliques, électriquement conducteurs.

Dans une variante particulièrement avantageuse de l'invention, le dispositif de chauffage est un dispositif d'alimentation en électricité d'un fil en matériau conducteur à mémoire de forme de l'enroulement moteur, ledit dispositif de chauffage étant apte à chauffer le fil conducteur de l'enroulement moteur par effet Joule.

Le chauffage du fil en matériau à mémoire de forme par effet Joule présente l'avantage d'être économique, léger et simple car il ne requiert aucun ajout de résistance, tuyauteries, ou autres. De plus le chauffage par effet Joule au sein même du fil de l'enroulement permet un chauffage homogène du matériau à mémoire de forme, puisqu'il n'existe aucun effet d'isolation ou de pertes thermiques entre moyens de chauffage et matériau à mémoire de forme (contrairement par exemple aux résistances collées dont la colle peut être considérée comme un isolant thermique).

L'enroulement moteur étant formé d'un fil conducteur enroulé, il permet un échauffement important pour un courant d'intensité relativement faible. En effet, la section efficace d'un fil en matériau à mémoire de forme est réduite en comparaison de la longueur de matériau traversée par le courant. Ainsi, la résistance électrique formée par une telle disposition du matériau à mémoire de forme permet d'obtenir un chauffage plus efficace à courant relativement faible.

La puissance mécanique de l'enroulement moteur dans l'invention reste néanmoins élevée grâce à la mise en parallèle mécaniquement de plusieurs spires d'un même fil et/ou de plusieurs fils en matériau à mémoire de forme au sein de l'enroulement moteur.

Par ailleurs, avantageusement et selon l'invention, un actionneur à enroulement en matériau à mémoire de forme comporte au moins un organe de réarmement, monté dans le corps, et agencé pour pouvoir exercer un effort, dit effort de réarmement :
- apte à déformer l'enroulement moteur d'une forme mémorisée à une autre forme, l'enroulement moteur étant au-dessous d'une température, dite température de transformation, au-delà de laquelle il tend à se déformer vers une forme mémorisée,
- inférieur à l'effort fournit par l'enroulement moteur, par sa déformation vers une forme mémorisée sous l'effet d'un chauffage au-dessus de sa température de transformation.

Un tel organe de réarmement est en particulier nécessaire lorsqu'un actionneur selon l'invention comporte un enroulement moteur en matériau à mémoire de forme du type simple sens qui, par définition, une fois dans sa forme mémorisée n'a aucun moyen de revenir de lui-même dans une autre forme et notamment dans sa forme initiale, ou forme de repos (avant déformation).

C'est pourquoi l'organe de réarmement doit exercer un effort de réarmement suffisant pour déformer l'enroulement moteur lorsque celui-ci revient au-dessous de sa température de transformation d'une forme mémorisée à une forme de repos, mais qui ne soit pas suffisant pour s'opposer à l'actionnement de l'enroulement moteur lorsque celui-ci se déforme d'une forme de repos vers une forme mémorisée.

Un tel organe de réarmement peut être de toute nature : ressort mécanique, vérin, moteur, etc. En particulier, un organe de réarmement selon l'invention peut comporter un enroulement moteur en matériau à mémoire de forme fonctionnant en opposition d'un premier enroulement moteur. Ainsi, en chauffant le premier enroulement moteur, on obtient un déplacement de l'équipage mobile dans un premier sens pendant que le deuxième enroulement moteur est ramené dans une forme de repos. Puis en laissant refroidir le premier enroulement moteur et en chauffant le second enroulement moteur, on obtient un déplacement de l'équipage mobile dans le sens opposé au premier sens de déplacement, le premier enroulement moteur étant simultanément ramené dans une forme de repos. Les deux enroulements en opposition sont avantageusement choisis identiques. Cependant rien n'empêche de ne pas les choisir identiques dans d'autres applications.

Avantageusement, un organe de réarmement selon l'invention permet de ramener l'enroulement moteur dans une forme de repos qui est déterminée par la forme des butées qui lui sont adjacentes. En particulier, lorsque les butées sont des surfaces conjuguées, l'enroulement moteur est comprimé entre les deux surfaces et adopte une forme de repos elle-même conjuguée à ces surfaces.

Par ailleurs, de préférence, avantageusement et selon l'invention, l'organe de réarmement comporte un ressort apte à exercer ledit effort de réarmement.

La réalisation de l'organe de réarmement sous forme d'un ressort permet de réaliser un actionneur simple et fiable. Les caractéristiques du ressort doivent être choisies pour être adaptées à chaque actionneur selon l'invention. En effet, la résistance opposée par le ressort de réarmement doit être inférieure à l'effort développé par l'enroulement moteur lors de sa déformation de sa forme de repos à sa forme mémorisée. Lorsque l'enroulement moteur se refroidit au contraire, et notamment lorsque sa température descend au-dessous de sa température de transformation, le ressort doit exercer un effort suffisant pour ramener l'organe moteur de sa forme mémorisée à sa forme de repos.

De plus, avantageusement et selon l'invention, le corps présente un axe de symétrie parallèle à sa dimension principale longitudinale, ledit équipage mobile étant guidé en translation par rapport au corps selon cet axe de symétrie.

Ainsi, l'axe de symétrie du corps de l'actionneur est confondu avec la direction de translation de l'équipage mobile. Le corps présente une telle configuration en particulier lorsqu'il est de forme globalement profilée.

En outre, avantageusement et selon l'invention, ledit équipage mobile est guidé en translation entre au moins une première position, dite position déployée, dans laquelle au moins une partie dudit équipage mobile s'étend en saillie par rapport au corps, et une deuxième position, dite position escamotée, dans laquelle il est au moins partiellement escamoté dans ledit corps.

Un actionneur linéaire est ainsi réalisé dans lequel un équipage mobile est plus ou moins en saillie de l'extrémité axiale du corps d'actionneur. En particulier, dans certains modes de réalisation, l'équipage mobile présente une tige qui est déplacée entre une position déployée et une position escamotée dans laquelle elle est entièrement escamotée dans le corps d'actionneur. La tige mobile peut être simple ou traversante.

De tels actionneurs peuvent être envisagés dans de nombreuses applications. Par exemple, ils peuvent être appliqués à des systèmes de verrouillage/déverrouillage. De même, ils peuvent être utilisés pour l'actionnement de valves ou de vannes.

Dans certains modes de réalisation avantageux de l'invention, l'enroulement moteur est agencé par rapport à l'équipage mobile de telle sorte que la déformation en flexion des spires jointives de l'enroulement moteur vers une forme mémorisée déplace l'équipage mobile vers une position déployée, l'actionneur étant un actionneur à pousser.

L'effort développé par l'enroulement moteur a pour effet de déplacer l'équipage mobile d'une position escamotée à une position déployée, donc en le poussant vers l'extérieur.

Dans un autre mode de réalisation avantageux de l'invention, l'enroulement moteur est agencé par rapport à l'équipage mobile de telle sorte que la déformation en flexion des spires jointives de l'enroulement moteur vers une forme mémorisée déplace l'équipage mobile vers une position escamotée, l'actionneur étant un actionneur à traction.

L'effort développé par l'enroulement moteur a pour effet de déplacer l'équipage mobile d'une position déployée à une position escamotée, donc en la ramenant vers l'intérieur.

Par ailleurs, avantageusement et selon l'invention, l'équipage mobile comprend :
- une tige mobile, et
- un piston dont une paroi fait office de butée mobile à un enroulement moteur,
le piston étant relié mécaniquement à la tige mobile par une transmission mécanique d'efforts selon ladite direction de translation.

En particulier un tel piston peut être assemblé à une tige mobile par exemple par soudure, ou réalisé dans une seule et même pièce avec la tige mobile, constituant ainsi un équipage mobile rigide en une seule pièce. L'équipage mobile étant mobile selon l'axe longitudinal, le piston de l'équipage mobile l'est aussi et entraîne la tige mobile dans son déplacement. L'enroulement moteur prend appui, en se déformant, sur une surface du piston de telle sorte qu'il modifie l'écartement entre le piston et une seconde butée fixe ou mobile elle-même en transmission mécanique avec le corps. Ces appuis de l'enroulement moteur se déformant à pour effet pour effet d'entraîner l'équipage mobile en déplacement selon la direction dé translation.

En outre, avantageusement et selon l'invention, un actionneur à enroulement moteur en matériau à mémoire de forme comporte :
- une butée fixe formée d'une paroi fixe dudit corps,
- au moins un étage moteur compris entre le piston de l'équipage mobile et la butée fixe, l'étage moteur comportant au moins deux enroulements moteurs à spires jointives.

Ainsi, si un actionneur selon l'invention comporte toujours deux butées, un enroulement moteur, et un équipage mobile, rien n'empêche qu'il comporte plusieurs enroulements moteurs chacun interposé entre deux butées, avec un équipage mobile comportant une ou plusieurs tiges.

En particulier, comme déjà décrit, un organe de réarmement peut être constitué d'un enroulement moteur à mémoire de forme en plus de l'enroulement moteur à mémoire de forme qu'il réarme.

De plus, dans le but d'augmenter l'effort fournit par un actionneur selon l'invention, plusieurs enroulements moteurs peuvent être mis en parallèle afin de procurer un effort et/ou un déplacement encore plus important. Dans ce cas, les enroulements moteurs se déforment avantageusement dans la même direction et leurs déplacements et/ou efforts mécaniques se cumulent.

Ainsi, l'un des enroulements moteurs peut être en appui contre une paroi, notamment une paroi interne d'extrémité axiale du corps.

De même l'organe de réarmement (ressort, enroulement moteur, etc.) peut être en appui sur une autre paroi interne d'extrémité axiale du corps afin de ramener l'équipage mobile dans une position (escamotée ou déployée) correspondant à la position de repos de l'(des)enroulement(s) moteur(s) d'actionnement opposé(s).

De plus, un actionneur selon l'invention peut présenter plusieurs équipages mobiles, chacun équipé d'une tige. Par exemple, un actionneur selon l'invention peut présenter un équipage mobile équipé d'une tige à chaque extrémité axiale d'un actionneur linéaire (au lieu d'une tige traversante).

De préférence, un actionneur selon l'invention comporte avantageusement au moins un piston mobile entre deux enroulements moteurs à spires jointives, chaque piston mobile faisant office de butées auxdits enroulements moteurs.

Ainsi dans le cas d'un actionneur linéaire, des pistons intermédiaires mobiles peuvent être disposés entre deux enroulements moteurs successifs afin de faire office de butée mobile entre chaque paire d'enroulements moteurs. La somme des différences d'écartements entre chaque paire de piston lorsque les enroulements moteurs sont dans une forme de repos et lorsque les enroulements moteurs sont dans une forme mémorisée, représente le déplacement total de l'équipage mobile.

De plus, avantageusement et selon l'invention, lorsque le dispositif de chauffage des enroulements moteurs est un dispositif de chauffage par effet Joule, les enroulements moteurs sont branchés en série électriquement

En outre, un actionneur selon l'invention, comprend avantageusement une pluralité d'enroulements moteurs branchés en parallèle électriquement.

Ainsi, on obtient une redondance nécessaire entre enroulements moteurs permettant de fiabiliser l'actionneur: même en cas de défaillance d'un enroulement moteur (rupture du fil par exemple), au moins un autre enroulement moteur continue d'assurer l'actionnement de l'actionneur.

Ainsi, dans le cas du branchement en série, la résistance électrique totale opposée par les enroulements moteurs à la propagation d'un courant électrique de chauffage par effet Joule est la somme des résistances individuelles de chaque enroulement moteur.

Les différents enroulements moteurs peuvent être dotés chacun d'une alimentation électrique propre afin, éventuellement, d'être contrôlés indépendamment (et/ou d'être redondants), ou bien ils peuvent avantageusement être électriquement connectés entre eux en série, formant ainsi un fil conducteur de longueur totale au moins la somme des longueurs de chaque enroulement moteur.

De cette manière, les enroulements moteurs connectés en série sont électriquement équivalents à un unique enroulement moteur dont la résistance et la somme des résistances individuelles de chaque enroulement. Ainsi on obtient un chauffage par effet Joule plus important pour un courant électrique d'intensité réduite.

Par ailleurs, avantageusement l'axe d'enroulement autour duquel l'enroulement moteur décrit des spires est sécant avec les surfaces de butée de chaque côté de l'enroulement moteur considéré.

De préférence, avantageusement et selon l'invention, les spires de chaque enroulement moteur sont enroulées autour de ladite direction de translation de l'actionneur.

Par ailleurs, le corps de l'actionneur peut présenter différentes formes en section droite transversale (par un plan perpendiculaire à l'axe longitudinal). Chaque enroulement moteur peut aussi présenter une enveloppe théorique de géométrie particulière (cylindrique, cubique, etc.) notamment en fonction de la géométrie des spires de l'enroulement autour de l'axe d'enroulement.

Plus particulièrement, avantageusement et selon l'invention, le corps étant cylindrique de révolution autour de la direction de translation, chaque enroulement moteur présente :
- dans ladite première forme, une forme annulaire de révolution autour de la direction de translation, de hauteur inférieure au plus grand rayon de la forme annulaire,
- dans ladite forme mémorisée, au moins une ondulation de la forme annulaire par rapport à un plan orthogonal à ladite direction de translation.

Dans sa forme de repos, l'enroulement moteur présente une forme annulaire, l'espace évidé en son centre étant notamment suffisant pour permettre le passage de la tige mobile, le cas échéant. L'enroulement moteur présente alors une forme d'anneau, notamment d'anneau plat longitudinalement. Une forme annulaire d'un enroulement moteur peut par extension comprendre des formes toriques, discoïdales, de couronne ou encore de galette.

Dans tous les cas, la hauteur de l'enroulement est strictement inférieure à son rayon le plus externe.

Dans sa forme mémorisée, l'enroulement moteur présente une enveloppe théorique de forme gauche, c'est-à-dire que sa forme de repos annulaire est déformée de telle sorte que ses deux extrémités axiales présentent une forme ondulée. En particulier l'enroulement moteur est, dans s forme mémorisée, en saillie d'un côté et/ou de l'autre d'un plan médian de sa forme de repos annulaire ; le plan médian étant notamment un plan orthogonal à ladite direction de translation.

Une telle déformation permet de modifier l'écartement entre les butées situées de part et d'autre de ces extrémités axiales. En particulier lorsque l'enroulement passe de sa forme de repos à sa forme mémorisée il éloigne axialement les butées l'une de l'autre.

En particulier, avantageusement et selon l'invention, dans une forme mémorisée, les extrémités longitudinales de l'enveloppe théorique de l'enroulement moteur présentent au moins une ondulation.

Dans sa forme mémorisée, l'enveloppe théorique de l'enroulement moteur peut présenter un nombre quelconque d'ondulations, en particulier une, deux, ou trois ondulations.

C'est-à-dire que l'enroulement moteur (de forme annulaire dans sa forme de repos) est, en forme mémorisée, fléchi autour d'au moins un axe, dit axe de fléchissement, orthogonal à l'axe longitudinal. Avantageusement, lorsque l'enveloppe théorique de l'enroulement moteur en forme mémorisée présente au moins deux ondulations, ces dernières sont opposées, et les axes de fléchissement sont distincts, parallèles les uns aux autres, alternativement d'un côté et de l'autre de l'enroulement moteur.

Un enroulement moteur selon l'invention peut présenter un nombre quelconque d'ondulations dans sa forme mémorisée, qu'il est possible de choisir en fonction des caractéristiques que l'on souhaite donner à l'actionneur: amplitude de déplacement de l'équipage mobile, efforts exercés par chaque enroulement moteur pour actionner l'équipage mobile, poids, encombrement, etc...

L'invention concerne aussi un actionneur caractérisé en combinaison par tout ou partie des caractéristiques mentionnées ci-dessus ou ci-après.

D'autres buts, caractéristiques et avantages de l'invention apparaissent à la lecture de la description suivante de deux modes de réalisation préférentiels donnés à titre d'exemples non limitatifs, et qui se réfèrent aux figures annexées dans lesquelles :
- la figure la est une vue schématique en coupe radiale d'un actionneur linéaire selon un premier mode de réalisation conforme à l'invention comportant deux enroulements moteurs dans une forme de repos,
- la figure 1b est une vue schématique d'un actionneur linéaire selon l'invention, conforme à la figure 1a, les enroulements moteurs étant dans une forme mémorisée,
- la figure 1c est une vue schématique d'un actionneur linéaire selon l'invention, en coupe transversale selon le plan I-I de la figure 1b,
- la figure 2a est une vue schématique en coupe radiale d'un actionneur linéaire selon un deuxième mode de réalisation conforme à l'invention comportant un enroulement moteur dans une forme de repos,
- la figure 2b est une vue schématique d'un actionneur linéaire, conforme à la figure 2a, l'enroulement moteur étant dans une forme mémorisée,
- la figure 2c est une vue schématique d'un actionneur linéaire selon l'invention, en coupe transversale selon le plan II-II de la figure 2b,
- la figure 3a est une vue schématique en coupe radiale d'un actionneur linéaire selon un troisième mode de réalisation conforme à l'invention comportant un enroulement moteur dans une forme de repos,
- la figure 3b est une vue schématique d'un actionneur linéaire, conforme à la figure 3a, l'enroulement moteur étant dans une forme mémorisée,
- la figure 3c est une vue schématique d'un actionneur linéaire selon l'invention, en coupe transversale selon le plan III-III de la figure 3b,
- la figure 4a est une vue schématique en coupe radiale d'un actionneur linéaire selon un quatrième mode de réalisation conforme à l'invention comportant un enroulement moteur dans une forme de repos,
- la figure 4b est une vue schématique d'un actionneur linéaire, conforme à la figure 4a, l'enroulement moteur étant dans une forme mémorisée,
- la figure 4c est une vue schématique d'un actionneur linéaire selon l'invention, en coupe transversale selon le plan IV-IV de la figure 4b,
- la figure 5a est une vue schématique en coupe radiale d'un actionneur linéaire selon un cinquième mode de réalisation conforme à l'invention comportant deux enroulements moteurs, un premier étant dans une forme de repos et le second étant dans une forme mémorisée,
- la figure 5b est une vue schématique d'un actionneur linéaire, conforme à la figure 5a, le second enroulement moteur étant dans une forme de repos et le premier dans une forme mémorisée
- la figure 5c est une vue schématique d'un actionneur linéaire selon l'invention, en coupe transversale selon le plan V-V de la figure 5b.

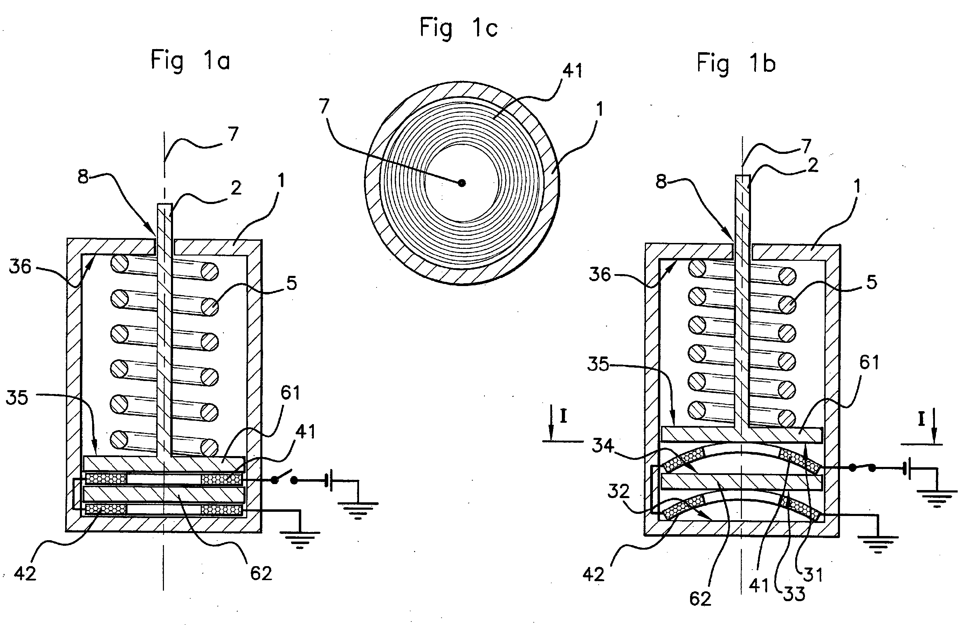

Un actionneur selon le mode de réalisation représenté sur les figures 1a, 1b et 1c présente un corps de forme cylindrique de révolution autour d'un axe 7 longitudinal, et est un actionneur linéaire simple effet, à pousser. En effet il présente un équipage mobile comportant une tige 2 mobile cylindrique monté tel que l'axe longitudinal de la tige mobile soit confondu avec l'axe 7 longitudinal du corps 1 de l'actionneur, l'équipage mobile étant mobile en translation selon l'axe 7 longitudinal.

Ladite tige 2 mobile peut être déployée et escamotée par un orifice 8 pratiqué dans l'une des extrémités longitudinales du corps 1.

Dans la suite, on attribue l'adjectif antérieur à tout élément, structure ou surface situé, à l'intérieur du corps 1 de l'actionneur, du côté de l'extrémité longitudinale du corps dans laquelle l'orifice 8 a été pratiqué, et on attribue l'adjectif postérieur à tout élément situé, à l'intérieur du corps 1, du côté opposé de cette extrémité longitudinale.

La tige 2 mobile peut être déplacée d'une position escamotée (figure 1a) dans laquelle elle est légèrement en saillie par rapport à une extrémité longitudinale du corps 1, à une position déployée (figure 1b) dans laquelle elle est plus en saillie par rapport à la même extrémité longitudinale du corps que dans sa position escamotée. Elle est déplacée d'une position escamotée à une position déployée par la déformation de deux enroulements 41, 42 moteurs d'une forme de repos (figure 1a) à une forme mémorisée (figure 1b).

Un premier enroulement 41 moteur est interposé entre la surface 31 postérieure d'un piston 61 d'un équipage mobile et la surface 34 antérieure d'un piston 62 mobile.

Les deux pistons 61, 62 sont de forme cylindrique de diamètre inférieur au diamètre intérieur du corps et sont montés dans le corps de telle manière que leur propre axe longitudinal soit confondu avec l'axe longitudinal du corps 1. Dans ce mode de réalisation particulier, le piston 61 fait partie d'un équipage mobile réalisé d'une seule pièce avec la tige 2 mobile et se trouve à l'extrémité postérieure de la tige 2 mobile.

Un second enroulement 42 moteur est interposé entre la surface 33 postérieure du piston 62 mobile et la paroi, dite paroi 32 postérieure, interne longitudinale postérieure du corps 1.

Le piston 62 mobile sert donc de butées 33, 34 à chacun des deux enroulements 41, 42 moteurs.

L'actionneur présente un organe 5 de réarmement qui est un ressort 5 hélicoïdal. Ce dernier a pour fonction de réarmer l'actionneur, c'est-à-dire de ramener la tige 2 mobile d'une position déployée à une position escamotée, en déformant les enroulements 41, 42 moteurs d'une forme mémorisée à une forme de repos, lorsque les enroulements 41, 42 moteurs sont assez refroidis pour pouvoir être déformés par ledit ressort 5.

Le ressort 5 est interposé entre la paroi, dite paroi 36 antérieure, interne longitudinale antérieure du corps 1, et la surface 35 antérieure du piston 61 de l'équipage mobile.

Le ressort 5 de réarmement ramène la tige mobile d'une position déployée à une position escamotée en exerçant une pression sur la paroi 35 antérieure du piston 61 de l'équipage mobile. Le piston 61 de l'équipage mobile étant réalisé dans la même pièce que la tige mobile, son déplacement longitudinal entraîne la tige mobile en déplacement longitudinal.

Les pistons 61, 62 présentent une forme cylindrique de révolution, dont la dimension radiale est plus grande que la dimension axiale, de sorte qu'ils présentent une forme d'anneau. De sorte que les enroulements 41, 42 moteurs, lorsqu'ils sont dans leur forme de repos, présentent une enveloppe théorique de forme conjuguée aux surfaces de butée entre lesquelles ils sont intercalés. Les enroulements moteurs sont en effet comprimés par le ressort 5 de réarmement, respectivement entre la paroi 32 postérieure du corps et la paroi 33 postérieure du piston 62 mobile, et entre la paroi antérieure du piston 62 mobile et la paroi postérieure du piston 61 de l'équipage mobile.

Lorsque les enroulements 41, 42 moteurs sont dans leur forme mémorisée, ils peuvent présenter différentes formes, notamment une forme gauche, en particulier des ondulations. Dans le mode de réalisation particulier représenté à la figure 1b, les enroulements 41, 42 moteurs sont en flexion autour d'un axe, dit axe de fléchissement, orthogonal et sécant à l'axe 7 longitudinal. De sorte qu'ils présentent, en coupe selon un plan comprenant l'axe 7 longitudinal et orthogonal à l'axe de fléchissement, une forme arrondie.

Par ailleurs, une première extrémité du premier enroulement 41 moteur est relié électriquement à une source d'énergie électrique d'un circuit électrique externe à l'actionneur. Une liaison électrique est réalisée entre la seconde extrémité du premier enroulement 41 moteur et une première extrémité du second enroulement 42 moteur. La seconde extrémité du second enroulement 42 moteur est relié au circuit électrique.

Sur la figure 1a, l'interrupteur du circuit électrique d'alimentation des enroulements moteurs est ouvert ; les enroulements moteurs ne sont donc pas chauffés. Sur la figure 1b, l'interrupteur du circuit électrique d'alimentation des enroulements moteurs est fermé, les enroulements 41, 42 moteurs sont chauffés par effet Joule et adoptent leur forme mémorisée.

Avantageusement dans tout enroulement moteur d'un actionneur selon l'invention, le(les) fil(s) en matériau mémoire de forme est(sont) isolé(s) électriquement sur sa(leur) surface radiale externe, hormis en en leurs extrémités, afin d'éviter une circulation de courant électrique entre spires.

De plus, le matériau à mémoire de forme utilisé pour réaliser les enroulements 41, 42 moteurs est un matériau à mémoire de forme simple sens dont l'unique forme mémorisée correspond à une position déployée de la tige 2 mobile représentée sur la figure 1b. Lorsque les enroulements ne sont pas dans leur forme mémorisée, ils sont déformés sous la contrainte d'un ressort 5 de réarmement comme représenté à la figure 1a. Ces enroulements sont ensuite actionnés grâce à un courant électrique fourni par une alimentation électrique externe, qui leur permet de s'échauffer par effet Joule jusqu'à leur température de transformation au-delà de laquelle ils exercent un effort en flexion tendant à déplacer l'équipage mobile et donc à déployer la tige mobile d'une position rétractée représentée sur la figure 1a vers une position déployée représentée sur la figure 1b.

Par exemple, on peut utiliser un alliage à mémoire de forme dans la famille des alliages nickel-titane, de résistivité comprise entre 0,5.10⁻⁶ Ω.m et 1,1.10⁻⁶ Ω.m (respectivement en phase austénitique et martensitique), et dont la plage de températures de transformation se situe entre 30 degrés Celsius (début de transformation) et 150 degrés Celsius (fin de transformation). On peut donc prévoir un enroulement moteur de 20 spires en alliage Ni-Ti de section 0,63 mm pour un chauffage par effet Joule par un courant d'intensité 1 Ampère afin d'obtenir un couple entre 0,1 et 30 N.m, notamment de l'ordre de grandeur de 1 N.m.

Dans ce mode de réalisation particulier, le matériau en AMF passe d'une température ambiante à une température d'environ 100°C en quelques minutes (environ 2 minutes). Ainsi on obtient une déformation complète d'une première forme à une forme mémorisée dans un temps généralement compris entre 1 minute et 90 minutes, notamment en environ 2 à 10 minutes.

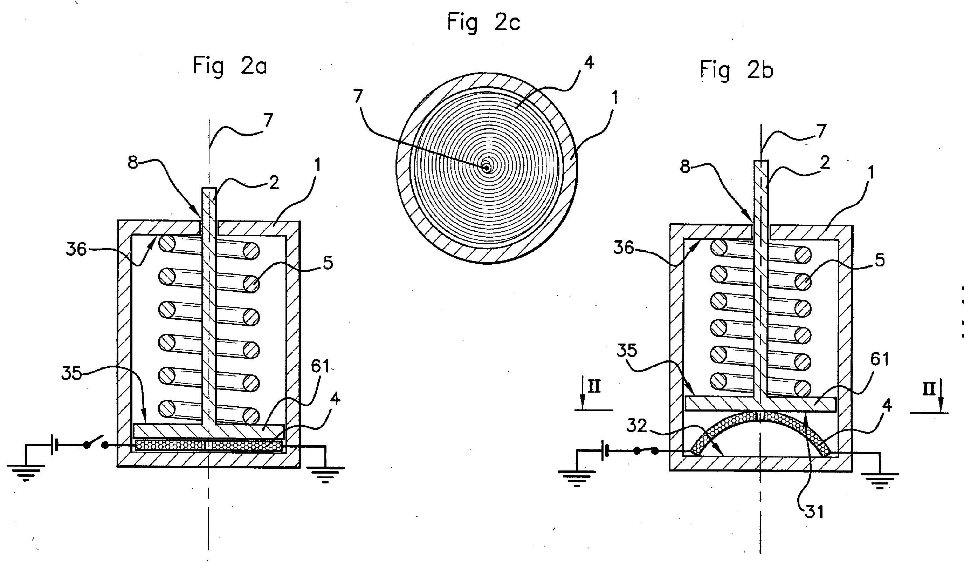

Un deuxième mode de réalisation d'un actionneur selon l'invention est représenté sur les figures 2a, 2b et 2c, similaire en tous points au premier mode de réalisation. L'unique différence de ce mode de réalisation, tient en ce qu'un unique enroulement 4 moteur est intercalé entre la paroi 32 postérieure et la surface 31 postérieure de l'unique piston 61 de l'équipage mobile.

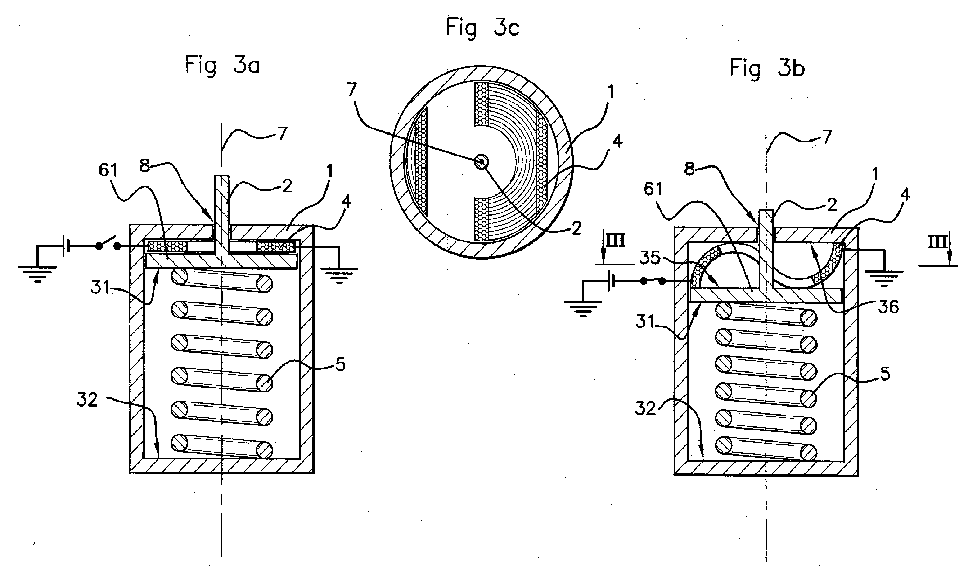

Un troisième mode de réalisation d'un actionneur selon l'invention est représenté sur les figures 3a, 3b et 3c. Dans ce mode de réalisation l'actionneur est linéaire à traction. En effet dans ce mode de réalisation, la tige mobile est en position déployée lorsque l'unique enroulement 4 moteur est dans sa forme de repos, et elle est en position escamotée lorsque l'enroulement moteur est dans sa forme mémorisée.

Ainsi dans ce troisième mode de réalisation, le ressort 5 de réarmement est intercalé entre la paroi 32 postérieure et la surface 31 postérieure de l'unique piston 61 de l'équipage mobile réalisé dans la même pièce que la tige mobile.

L'enroulement 4 moteur est quand à lui intercalé entre la surface 35 antérieure du piston 61 de l'équipage mobile et la paroi 36 antérieure du corps 1. Lorsque l'enroulement moteur est chauffé par effet Joule au-delà de sa température de transformation. Il se déforme donc de sa forme de repos dans laquelle son enveloppe théorique présente une forme annulaire aplatie (figure 3a), à sa forme mémorisée (figure 3b). En forme mémorisée, il est doublement fléchi autour de deux axes de fléchissement parallèles entre eux et orthogonaux à l'axe 7 longitudinal, situés de part et d'autre longitudinalement de l'enroulement moteur, de sorte que ce dernier présente un point d'inflexion. Cette forme mémorisée est représentée à la figure 3b en une coupe transversale (par un plan contenant l'axe longitudinal et orthogonal aux axes de fléchissement.

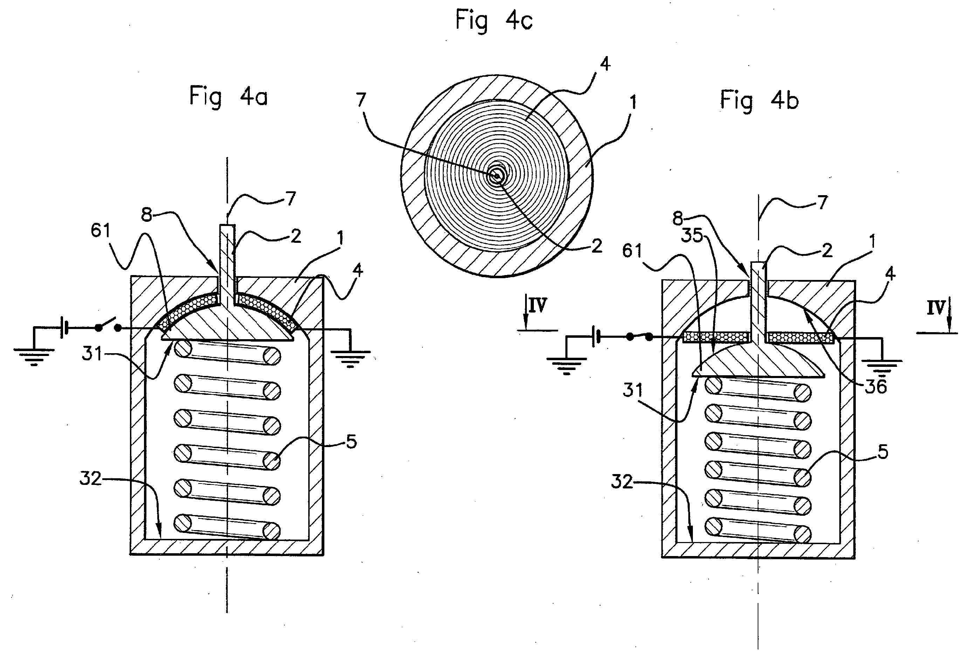

Un quatrième mode de réalisation d'un actionneur selon l'invention est représenté sur les figures 4a, 4b et 4c. Comme sur les figures 3a, 3b et 3c, il s'agit d'un actionneur linéaire à traction. Dans ce mode de réalisation la paroi 36 antérieure du corps 1 n'est pas plane, elle présente la forme d'une portion de sphère. La surface 35 antérieure du piston 61 de l'équipage mobile est conjuguée à la paroi 36 antérieure du corps et présente donc elle aussi la forme d'une portion de sphère de même diamètre.

La tige 2 mobile et dans une position déployée lorsque l'enroulement moteur est dans sa forme de repos. Dans sa forme de repos, l'enroulement moteur est comprimé par le ressort 5 de réarmement, entre la paroi 36 antérieure du corps et la surface 35 antérieure du piston mobile, et adopte donc une forme de portion de sphère.

Lorsque l'enroulement moteur est dans sa forme mémorisée, il adopte une forme cylindrique de révolution dont les deux surfaces d'extrémité longitudinale sont planes et d'épaisseur inférieure à la dimension de l'un de ses rayons. Son enveloppe théorique est de plus évidée en son centre de sorte qu'il présente une forme générale d'un anneau aplati. En adoptant cette forme il écarte le piston 61 de la paroi 36 antérieure du corps en prenant appui sur une couronne externe de la paroi 36 antérieure et sur une couronne de la surface 35 antérieure à proximité de la liaison entre la tige 2 mobile et le piston 61 de l'équipage mobile. Ce faisant, l'enroulement moteur comprime le ressort 5 de réarmement intercalé entre la surface 31 postérieure du piston mobile et la paroi 32 postérieure du corps. Le piston 61 de l'équipage mobile étant réalisé dans la même pièce que la tige 2 mobile, celle-ci est dans une position escamotée lorsque l'enroulement moteur et dans sa forme mémorisée.

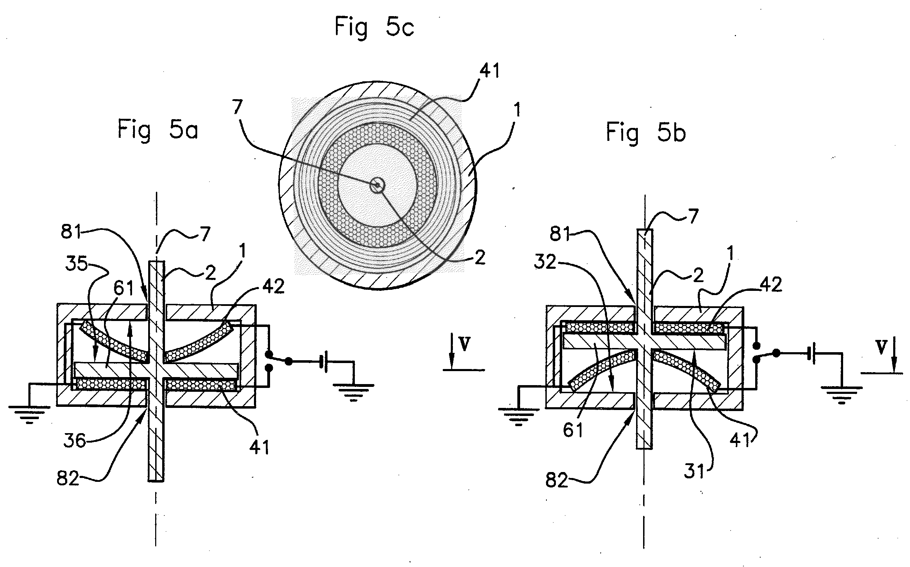

Un cinquième mode de réalisation d'un actionneur selon l'invention est représenté sur les figures 5a, 5b et 5c. Il s'agit cette fois d'un actionneur à double effet c'est-à-dire à pousser et à traction, disposant de plus d'une tige traversante, c'est-à-dire que la tige débouche par deux orifices 81, 82 chacun pratiqué dans l'une des deux extrémités longitudinales du corps 1 de l'actionneur. On conserve les termes antérieur et postérieur en prenant référence sur l'extrémité du corps 1 dans laquelle l'orifice 81 est pratiqué.

Dans ce mode de réalisation, l'équipage mobile est réalisé en une seule pièce et la tige 2 mobile de l'équipage mobile est traversante. L'équipage mobile présente un piston 61 disposé au milieu de la longueur de la tige mobile.

En outre, dans ce mode de réalisation, un premier enroulement 41 moteur et un second enroulement 42 moteur identique, sont situés de part et d'autre du piston 61 de l'équipage mobile. Ainsi un enroulement 41 moteur postérieur est en appui entre une première butée formée par la paroi 32 postérieure et une seconde butée formée par la surface 31 postérieure du piston 61. Le second enroulement 42 moteur antérieur est en appui entre une butée formée par la paroi 36 antérieure et la surface 35 antérieure du piston 61.

Par ailleurs, un commutateur est monté sur le circuit électrique d'alimentation des enroulements moteurs, qui permet de sélectionner entre les deux branches du circuit électrique, chaque enroulement moteur étant sur l'une des deux branches du circuit électrique. Ainsi lorsque l'enroulement 42 moteur antérieur est alimenté électriquement, l'enroulement 41 moteur postérieur ne l'est pas, et vice versa.

Ainsi lorsque l'enroulement 41 moteur postérieur est chauffé, il écarte le piston 61 de l'équipage mobile de la paroi 32 postérieure, en déplaçant d'autant la tige traversante. Il s'agit donc d'un actionneur à traction à l'une de ses extrémités longitudinales, et d'un actionneur à pousser à l'autre extrémité. En se déformant de sa forme de repos à sa forme mémorisée, l'enroulement 41 moteur postérieur assure aussi la fonction d'un organe de réarmement de l'enroulement 42 moteur antérieur en ramenant ce dernier d'une forme mémorisée à une forme de repos (passage de la figure 5a à la figure 5b).

Le passage de la figure 5b à la figure 5a se fait de façon symétrique en alimentant électriquement l'enroulement 42 moteur antérieur et en coupant l'alimentation électrique de l'enroulement 41 moteur postérieur, à condition que ce dernier se refroidisse, c'est-à-dire que la température ambiante soit inférieure à sa propre température.

L'invention peut faire l'objet de nombreuses variantes par rapport aux modes de réalisation décrits ci-dessus et représentés sur les figures et comprises dans l'objet défini par les revendications. En particulier, elle s'applique à tous types et toutes formes d'actionneurs.

De plus, rien n'empêche d'utiliser d'autres organes de réarmement jugés plus appropriés.

Il est aussi possible de choisir entre les différents matériaux à mémoire de forme connus en fonction de leurs caractéristiques propres pour réaliser le(s) enroulement(s) moteur(s).

Par ailleurs, on peut chauffer le matériau à mémoire de forme d'une autre manière que par effet Joule, les avantages et inconvénients de chaque technique de chauffage étant connus. Il est aussi possible de prévoir un dispositif de refroidissement des enroulements moteurs.

Enfin, rien n'empêche de fixer certains points des enroulements moteurs aux butées qui lui sont adjacentes, notamment afin de pouvoir exercer un effort de traction tendant à diminuer l'écartement entre les deux butées, en particulier dans les cas où on utilise un matériau à mémoire de forme double sens avec ou sans organe de réarmement.

## Revendications

1. Actionneur comportant :
- un corps (1),
- un équipage (2) mobile en translation par rapport au corps (1) selon une direction, dite direction (7) de translation,
- une première butée (31) mobile formée d'une paroi de l'équipage mobile, et une deuxième butée (32) reliée mécaniquement au corps par une transmission mécanique d'efforts selon ladite direction de translation,
- au moins un enroulement, dit enroulement (4, 41, 42) moteur, en matériau à mémoire de forme présentant au moins une forme stable, dite forme mémorisée, et étant interposé entre les deux butées (31, 32), ces dernières étant écartées l'une de l'autre selon la direction de translation d'un écartement différent selon la forme de l'enroulement (4, 41, 42) moteur, ledit équipage (2) mobile étant déplacé par rapport au corps sous l'effet d'une variation de cet écartement induite par déformation dudit enroulement moteur,
**caractérisé en ce que** l'enroulement (4, 41, 42) moteur est un enroulement à spires jointives électriquement isolées, adapté pour pouvoir se déformer par déformation en flexion commune à toutes les spires.

2. Actionneur selon la revendication 1, **caractérisé en ce que** ledit enroulement (4, 41, 42) moteur à spires jointives se déforme en flexion par rapport à un plan orthogonal à ladite direction (7) de translation.

3. Actionneur selon l'une des revendications 1 ou 2, **caractérisé en ce qu'**il comporte un dispositif de chauffage adapté pour pouvoir chauffer ledit enroulement (4, 41, 42) moteur au moins jusqu'à une température, dite température de transformation, au-dessus de laquelle l'enroulement moteur tend à se déformer vers une forme mémorisée.

4. Actionneur selon la revendication 3, **caractérisé en ce que** le dispositif de chauffage est un dispositif d'alimentation en électricité d'un fil en matériau conducteur à mémoire de forme de l'enroulement (4, 41, 42) moteur, ledit dispositif de chauffage étant apte à chauffer le fil conducteur de l'enroulement moteur par effet Joule.

5. Actionneur selon l'une des revendications 1 à 4, **caractérisé en ce qu'**il comporte au moins un organe (5) de réarmement, monté dans le corps, et agencé pour pouvoir exercer un effort, dit effort de réarmement, :
- apte à déformer l'enroulement (4, 41, 42) moteur d'une forme mémorisée à une autre forme, l'enroulement moteur étant au-dessous d'une température, dite température de transformation, au-delà de laquelle il tend à se déformer vers une forme mémorisée,
- inférieur à l'effort fournit par l'enroulement (4, 41, 42) moteur, par sa déformation vers une forme mémorisée sous l'effet d'un chauffage au-dessus de sa température de transformation.

6. Actionneur selon la revendication 5, **caractérisé en ce que** l'organe (5) de réarmement comporte un ressort apte à exercer ledit effort de réarmement.

7. Actionneur selon l'une des revendications 1 à 6, **caractérisé en ce que** le corps présente un axe de symétrie parallèle à sa dimension principale longitudinale, ledit équipage (2) mobile étant guidé en translation par rapport au corps (1) selon cet axe de symétrie.

8. Actionneur selon l'une des revendications 1 à 7, **caractérisé en ce que** ledit équipage (2) mobile est guidé en translation entre au moins une première position, dite position déployée, dans laquelle au moins une partie dudit équipage mobile s'étend en saillie par rapport au corps (1), et une deuxième position, dite position escamotée, dans laquelle il est au moins partiellement escamoté dans ledit corps.

9. Actionneur selon les revendications 2 et 8, **caractérisé en ce que** l'enroulement moteur est agencé par rapport à l'équipage (2) mobile de telle sorte que la déformation en flexion des spires jointives de l'enroulement moteur vers une forme mémorisée déplace l'équipage mobile vers sa position déployée, l'actionneur étant un actionneur à pousser.

10. Actionneur selon les revendications 2 et 8, **caractérisé en ce que** l'enroulement moteur est agencé par rapport à l'équipage mobile de telle sorte que la déformation en flexion des spires jointives de l'enroulement moteur vers une forme mémorisée déplace l'équipage mobile vers sa position escamotée, l'actionneur étant un actionneur à traction.

11. Actionneur selon l'une des revendications 1 à 10, **caractérisé en ce que** l'équipage mobile comprend :
- une tige (2) mobile, et
- un piston (61) dont une paroi fait office de butée (31) mobile à un enroulement moteur,
le piston (61) étant relié mécaniquement à la tige (2) mobile par une transmission mécanique d'efforts selon ladite direction (7) de translation.

12. Actionneur selon l'une des revendications 1 à 11, **caractérisé en ce qu'**il comporte :
- une butée (32) fixe formée d'une paroi fixe dudit corps,
- au moins un étage moteur compris entre le piston (61) de l'équipage mobile et la butée (32) fixe, l'étage moteur comportant au moins deux enroulements (41, 42) moteurs à spires jointives.

13. Actionneur selon la revendication 12, **caractérisé en ce qu'**il comporte au moins un piston (62) mobile entre deux enroulements moteurs adjacents à spires jointives, chaque piston (62) mobile faisant office de butées (33, 34) auxdits enroulements moteurs.

14. Actionneur selon la revendication 4 et l'une des revendications 2 à 13, **caractérisé en ce que** le dispositif de chauffage des enroulements moteurs étant un dispositif de chauffage par effet Joule, les enroulements moteurs sont branchés en série électriquement.

15. Actionneur selon l'une des revendications 1 à 14, **caractérisé en ce que** les spires de chaque enroulement moteur sont enroulées autour de ladite direction (7) de translation de l'actionneur.

16. Actionneur selon la revendication 15, **caractérisé en ce que**, le corps (1) étant cylindrique de révolution autour de la direction (7) de translation, chaque enroulement moteur présente :
- dans ladite première forme, une forme annulaire de révolution autour de la direction (7) de translation, de hauteur inférieure au plus grand rayon de la forme annulaire,
- dans ladite forme mémorisée, au moins une ondulation de la forme annulaire par rapport à un plan orthogonal à ladite direction (7) de translation.

## Patentansprüche

1. Stellorgan, folgendes umfassend:
- einen Korpus (1),
- eine im Verhältnis zum Korpus (1) in eine Richtung verschiebbare Ausrüstung (2), die Translationsrichtung (7) genannt wird,
- einen ersten mobilen Anschlag (31), der aus einer Wand der verschiebbaren Ausrüstung gebildet wird, und einen zweiten Anschlag (32), der durch eine mechanische Krafteinleitung in die besagte Translationsrichtung mechanisch mit dem Korpus verbunden ist,
- zumindest eine Wicklung, die Motorwicklung (4, 41, 42) genannt wird, aus einem Material mit Formspeicher, das zumindest eine stabile Form aufweist, die gespeicherte Form genannt wird, und zwischen den beiden Anschlägen (31, 32) eingesetzt wird, wobei diese letzteren in die Translationsrichtung in einem Abstand voneinander angeordnet sind, der je nach Form der Motorwicklung (4, 41, 42) unterschiedlich ist, wobei die besagte verschiebbare Ausrüstung (2) im Verhältnis zum Korpus unter der Wirkung einer Variation dieses Abstandes verschoben wird, die durch die Verformung der besagten Motorwicklung bewirkt wird,
**dadurch gekennzeichnet, dass** die Motorwicklung (4, 41, 42) eine Wicklung mit elektrisch isolierten aneinandergesetzten Windungen ist, die sich dazu eignet, um sich durch eine Biegeverformung, die für alle Windungen gleich ist, verformen zu können.

2. Stellorgan nach Anspruch 1, **dadurch gekennzeichnet, dass** sich die besagte Motorwicklung (4, 41, 42) mit aneinandergesetzten Windungen im Verhältnis zu einer Ebene senkrecht zur besagten Translationsrichtung (7) biegeverformt.

3. Stellorgan nach einem der Ansprüche 1 oder 2, **dadurch gekennzeichnet, dass** es eine geeignete Heizvorrichtung umfasst, um die besagte Motorwicklung (4, 41, 42) zumindest bis auf eine Temperatur zu erwärmen, die Umwandlungstemperatur genannt wird, über der die Motorwicklung dazu tendiert, sich in eine gespeicherte Form zu verformen.

4. Stellorgan nach Anspruch 3, **dadurch gekennzeichnet, dass** die Heizvorrichtung eine Stromversorgungsvorrichtung für einen Draht aus einem leitenden Material mit Formspeicher der Motorwicklung (4, 41, 42) ist, wobei die besagte Heizvorrichtung imstande ist, den leitenden Draht der Motorwicklung durch Stromwärme zu erwärmen.

5. Stellorgan nach einem der Ansprüche 1 bis 4, **dadurch gekennzeichnet, dass** es zumindest ein Rückstellungsorgan (5) umfasst, das im Korpus montiert ist und angeordnet ist, um eine Kraft ausüben zu können, die Rückstellungskraft genannt wird:
- die imstande ist, die Motorwicklung (4, 41, 42) von einer gespeicherten Form in eine andere Form zu verformen, wobei die Motorwicklung unter einer Temperatur liegt, die Umwandlungstemperatur genannt wird, über der sie dazu tendiert, sich in eine gespeicherte Form zu verformen,
- die geringer ist, als die Kraft, die durch die Motorwicklung (4, 41, 42) durch ihre Verformung in eine gespeicherte Form unter der Wirkung einer Erwärmung über ihre Umwandlungstemperatur beigesteuert wird.

6. Stellorgan nach Anspruch 5, **dadurch gekennzeichnet, dass** das Rückstellungsorgan (5) eine Feder umfasst, die imstande ist, die besagte Rückstellungskraft auszuüben.

7. Stellorgan nach einem der Ansprüche 1 bis 6, **dadurch gekennzeichnet, dass** der Korpus eine Symmetrieachse parallel zu seiner Hauptlängsabmessung aufweist, wobei die besagte verschiebbare Ausrüstung (2) entlang dieser Symmetrieachse im Verhältnis zum Korpus (1) in Verschiebrichtung geführt wird.

8. Stellorgan nach einem der Ansprüche 1 bis 7, **dadurch gekennzeichnet, dass** die besagte verschiebbare Ausrüstung (2) in Verschiebrichtung zwischen zumindest einer ersten Position, die ausgefahrene Position genannt wird, in der sich zumindest ein Teil der besagten verschiebbaren Ausrüstung im Verhältnis zum Korpus (1) überstehend erstreckt, und einer zweiten Position geführt wird, die eingezogene Position genannt wird, in der sie zumindest teilweise in den besagten Korpus eingezogen ist.

9. Stellorgan nach den Ansprüchen 2 und 8, **dadurch gekennzeichnet, dass** die Motorwicklung im Verhältnis zur verschiebbaren Ausrüstung (2) derart angeordnet ist, dass die Biegeverformung der aneinandergesetzten Windungen der Motorwicklung zu einer gespeicherten Form die verschiebbare Ausrüstung in ihre ausgefahrene Position bewegt, wobei das Stellorgan ein Stellorgan zum Schieben ist.

10. Stellorgan nach den Ansprüchen 2 und 8, **dadurch gekennzeichnet, dass** die Motorwicklung im Verhältnis zur verschiebbaren Ausrüstung derart angeordnet ist, dass die Biegeverformung der aneinandergesetzten Windungen der Motorwicklung zu einer gespeicherten Form die verschiebbare Ausrüstung in ihre eingezogene Position bewegt, wobei das Stellorgan ein Stellorgan zum Ziehen ist.

11. Stellorgan nach einem der Ansprüche 1 bis 10, **dadurch gekennzeichnet, dass** die verschiebbare Ausrüstung folgendes umfasst:
- einen mobilen Stift (2), und
- einen Kolben (61) dessen eine Wand als mobiler Anschlag (31) für eine Motorwicklung fungiert,
wobei der Kolben (61) durch eine mechanische Krafteinleitung in die besagte Translationsrichtung (7) mechanisch mit dem mobilen Stift (2) verbunden ist.

12. Stellorgan nach einem der Ansprüche 1 bis 11, **dadurch gekennzeichnet, dass** es folgendes umfasst:
- einen festen Anschlag (32), der aus einer festen Wand des besagten Korpus gebildet wird,
- zumindest eine Motorstufe zwischen dem Kolben (61) der verschiebbaren Ausrüstung und dem festen Anschlag (32), wobei die Motorstufe zumindest zwei Motorwicklungen (41, 42) mit aneinandergesetzten Windungen umfasst.

13. Stellorgan nach Anspruch 12, **dadurch gekennzeichnet, dass** es zumindest einen mobilen Kolben (62) zwischen zwei benachbarten Motorwicklungen mit aneinandergesetzten Windungen umfasst, wobei jeder mobile Kolben (62) als Anschlag (33, 34) für die besagten Motorwicklungen fungiert.

14. Stellorgan nach Anspruch 4 und einem der Anschläge 2 bis 13, **dadurch gekennzeichnet, dass** die Motorwicklungen, da die Heizvorrichtung der Motorwicklungen eine Heizvorrichtung durch Stromwärme ist, elektrisch in Reihe geschaltet sind.

15. Stellorgan nach einem der Ansprüche 1 bis 14, **dadurch gekennzeichnet, dass** die Windungen einer jeden Motorwicklung um die besagte Translationsrichtung (7) des Stellogans gewickelt sind.

16. Stellorgan nach Anspruch 15, **dadurch gekennzeichnet, dass** jede Motorwicklung, da der Korpus (1) ein Rotationszylinder um die Translationsrichtung (7) ist, folgendes aufweist:
- in der besagten ersten Form eine ringförmige Rotationsform um die Translationsrichtung (7) mit einer geringeren Höhe als der größte Radius der Ringform,
- in der besagten gespeicherten Form zumindest eine Welligkeit der Ringform im Verhältnis zu einer Ebene senkrecht zur besagten Translationsrichtung (7).

## Claims

1. An actuator comprising:
- a body (1);
- a mechanism (2) that can translationally move relative to said body (1) in a direction, named translation direction (7);
- a first movable stop (31) formed by a first wall of said movable mechanism, and a second stop mechanically linked to said body by a mechanical transmission of forces in said translation direction;
- at least one winding, named motor winding (4, 41, 42), made of shape memory material having at least one stable shape, named memorised shape, and being interposed between said two stops (31, 32), said stops being spaced apart from each other in said translation direction by a different spacing depending on the shape of said motor winding (4, 41, 42), said movable mechanism (2) being displaced relative to said body under the effect of a variation in this spacing induced by deformation of said motor winding,
**characterised in that** said motor winding (4, 41, 42) is a winding with electrically isolated contiguous turns adapted to be able to deform by flexural deformation common to all of the turns.

2. The actuator according to claim 1, **characterised in that** said motor winding (4, 41, 42) with contiguous turns deforms by flexion relative to a plane orthogonal to said translation direction (7).

3. The actuator according to claim 1 or 2, **characterised in that** it comprises a heating device adapted to be able to heat said motor winding (4, 41, 42) at least up to a temperature, named transformation temperature, above which said motor winding tends to deform to a memorized shape.

4. The actuator according to claim 3, **characterised in that** said heating device is a device for supplying electricity to a wire, made of conducting shape memory material, of said motor winding (4, 41, 42), said heating device being capable of heating said conducting wire of said motor winding by Joule effect.

5. The actuator according to any one of claims 1 to 4, **characterised in that** it comprises at least one resetting member (5) mounted in said body and arranged to be able to exert a force, named resetting force, that is:
- capable of deforming said motor winding (4, 41, 42) from a memorized shape to another shape, said motor winding being below a temperature, named transformation temperature, beyond which it tends to deform to a memorised shape;
- lower than the force provided by said motor winding (4, 41, 42) by its deformation to a memorised shape under the effect of heating above its transformation temperature.

6. The actuator according to claim 5, **characterised in that** said resetting member (5) comprises a spring capable of exerting said resetting force.

7. The actuator according to any one of claims 1 to 6, **characterised in that** said body has an axis of symmetry parallel to its main longitudinal dimension, said movable mechanism (2) being translationally guided relative to said body (1) along said axis of symmetry.

8. The actuator according to any one of claims 1 to 7, **characterised in that** said movable mechanism (2) is translationally guided between at least one first position, named deployed position, in which at least part of said movable mechanism projects relative to said body (1), and a second position, named stowed position, in which it is at least partially stowed in said body.

9. The actuator according to claims 2 and 8, **characterised in that** said motor winding is arranged relative to said movable mechanism (2) such that the flexural deformation of the contiguous turns of said motor winding to a memorised shape displaces said movable mechanism to its deployed position, with said actuator being a push actuator.

10. The actuator according to claims 2 and 8, **characterised in that** said motor winding is arranged relative to said movable mechanism such that the flexural deformation of the contiguous turns of said motor winding to a memorised shape displaces said movable mechanism to its stowed position, with said actuator being a pull actuator.

11. The actuator according to any one of claims 1 to 10, **characterised in that** said movable mechanism comprises:
- a movable rod (2), and
- a piston (61), a wall of which acts as a movable stop (31) for a motor winding,
said piston (61) being mechanically linked to said movable rod (2) by a mechanical transmission of forces in said translation direction (7).

12. The actuator according to any one of claims 1 to 11, **characterised in that** it comprises:
- a fixed stop (32) formed by a fixed wall of said body;
- at least one drive section included between said piston (61) of said movable mechanism and said fixed stop (32), with said drive section comprising at least two motor windings (41, 42) with contiguous turns.

13. The actuator according to claim 12, **characterised in that** it comprises at least one movable piston (62) between two adjacent motor windings with contiguous turns, each movable piston (62) acting as a stop (33, 34) for said motor windings.

14. The actuator according to claim 4 and of any one of claims 2 to 13, **characterised in that**, with said device for heating said motor windings being a device for heating by Joule effect, said motor windings are electrically connected in series.

15. The actuator according to any one of claims 1 to 14, **characterised in that** the turns of each motor winding are wound about said translation direction (7) of said actuator.

16. The actuator according to claim 15, **characterised in that**, with said body (1) being cylindrical for rotating about said translation direction (7), each motor winding has:
- in said first shape, an annular shape for rotating about said translation direction (7) with a height that is lower than the largest radius of said annular shape;
in said memorized shape, at least one undulation of the annular shape relative to a plane orthogonal to said translation direction (7).
